# EUROPEAN PATENT APPLICATION

(11) **EP 4 722 709 A1**
(43) Date of publication of application: **08.04.2026**
(21) Application number: 25206191.6
(22) Date of filing: 01.10.2025
(51) Int. Cl.: G01N 29/04, G01N 29/22, G01N 29/265, G01N 29/28

(54) **ULTRASONIC INSPECTION SYSTEM UTILIZING ACOUSTIC COUPLING MEDIA**

(30) Priority: 01.10.2024 US 202418903222
(71) Applicant: RTX Corporation, Farmington, CT 06032 (US)
(72) Inventor: Baig, Zubair, South Windsor, 06074 (US)
(74) Representative: Dehns

(57) **Abstract**

An inspection method is provided during which a probe assembly (28) is arranged with a component (22). The probe assembly includes a conduit (34) and an inspection probe (36). The inspection probe includes a probe head (60) located within a bore (50) of the conduit. The probe head includes an ultrasonic transducer (70). The arranging of the probe assembly includes: moving the conduit to sealingly engage a distal end (46) of the conduit against a surface (52) of the component; and moving the inspection probe to abut the probe head against the surface of the component. An acoustic coupling media (40) is disposed within the bore contacting the probe head and the surface of the component. A characteristic of the component is determined using the probe assembly. The determining of the characteristic includes: generating an ultrasonic signal using the ultrasonic transducer; and directing the ultrasonic signal from the probe head, through the acoustic coupling media, into the component.

## Description

### BACKGROUND OF THE DISCLOSURE

### 1. Technical Field

This disclosure relates generally to inspection and, more particularly, to nondestructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a probe assembly is arranged with a component. The probe assembly includes a conduit and an inspection probe. The inspection probe includes a probe head located within a bore of the conduit. The probe head includes an ultrasonic transducer. The arranging of the probe assembly includes: moving the conduit longitudinally along a centerline of the probe assembly to sealingly engage a distal end of the conduit against a surface of the component; and moving the inspection probe longitudinally along the centerline of the probe assembly to abut the probe head against the surface of the component. An acoustic coupling media is disposed within the bore of the conduit contacting the probe head and the surface of the component. A characteristic of the component is determined using the probe assembly. The determining of the characteristic includes: generating an ultrasonic signal using the ultrasonic transducer; and directing the ultrasonic signal from the probe head, through the acoustic coupling media, into the component.

According to another aspect of the present disclosure, another inspection method is provided. This inspection method includes: inserting a probe assembly into an interior of a powerplant, the powerplant including a component within the interior of the powerplant, the probe assembly including a conduit and an inspection probe, the inspection probe including a probe head located within a bore of the conduit, and the probe head including an ultrasonic transducer; translating the conduit longitudinally along a centerline of the probe assembly to sealingly engage a distal end of the conduit against the component; translating the inspection probe longitudinally along the centerline of the probe assembly to abut the probe head against the component, wherein an acoustic coupling media is disposed within the bore of the conduit contacting the probe head and the component; and determining presence of a defect internal to the component using the probe assembly. The determining of the presence of the defect includes: generating an ultrasonic signal using the ultrasonic transducer; and directing the ultrasonic signal from the probe head, through the acoustic coupling media, into the component.

According to still another aspect of the present disclosure, a system is provided for inspecting a powerplant component. This system includes a conduit, an inspection probe, a preload device and an acoustic coupling media. The conduit extends longitudinally along a centerline from a base end of the conduit to a distal end of the conduit. The conduit is configured to translate longitudinally along the centerline such that the distal end of the conduit is operable to sealing engage a surface of the powerplant component. The inspection probe includes a probe body and a probe head connected to the probe body. The probe body projects longitudinally into a bore of the conduit to the probe head. A distal end of the probe head is configured to abut against the surface of the powerplant component. The probe head includes an ultrasonic transducer. The preload device is configured to preload at least one of the conduit or the probe head longitudinally against the surface of the powerplant component. The acoustic coupling media is provided for directing into the bore of the conduit and contacting the probe head and the surface of the powerplant component.

The inspection method may also include directing the acoustic coupling media into the bore of the conduit after sealingly engaging the distal end of the conduit against the component and before abutting the probe head against the component.

The inspection method may include directing the acoustic coupling media into the conduit after the distal end of the conduit sealing engages the surface of the component.

The acoustic coupling media may be directed into the conduit before the probe head is abutted against the surface of the component.

The acoustic coupling media may be directed into the conduit after the probe head is abutted against the surface of the component.

The probe assembly may also include a seal element at the distal end of the conduit. The seal element may provide a sealed interface between the conduit and the surface of the component when the conduit sealing engages the surface of the component.

The seal element may be configured as or otherwise include an O-ring.

The inspection method may also include preloading the conduit at the sealing engagement between the distal end of the conduit and the surface of the component.

The inspection method may also include preloading the probe head against the surface of the component sealed by a seal element at a tip of the inspection probe.

The inspection method may also include preloading the probe head against the surface of the component.

A reflection of the ultrasonic signal may be directed out of the component, through the acoustic coupling media, to the probe head. The determining of the characteristic may also include detecting a parameter of the reflection of the ultrasonic signal using the ultrasonic transducer.

The determining of the characteristic may also include processing data indicative of the parameter to determine the characteristic.

The characteristic may be determined to detect presence of a defect internal to the component.

The acoustic coupling media may be a liquid.

The acoustic coupling media may be or otherwise include water.

The component may be disposed within an interior of a powerplant during the determining of the characteristic of the component.

The powerplant may be configured as or otherwise include an aircraft engine. The component may be a component of the aircraft engine.

The component may be configured as or otherwise include an engine component.

The component may be configured as or otherwise include a rotor disk of a turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic cutaway illustration of an inspection system with an aircraft powerplant.
FIG. 2 is a partial cutaway illustration of a portion of an inspection probe within a bore of a media conduit.
FIG. 3 is a partial schematic cutaway illustration of the inspection system and the aircraft powerplant with another inspection probe head arrangement.
FIG. 4 is a flow diagram of a method for inspecting a powerplant component.
FIG. 5 is a partial schematic sectional illustration of a gas turbine engine.

### DETAILED DESCRIPTION

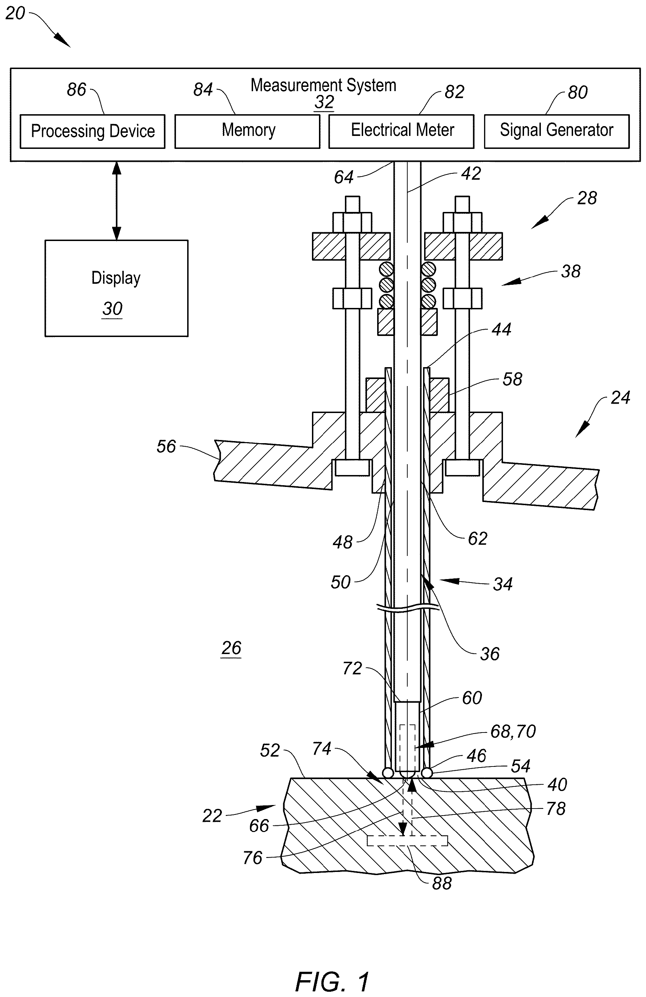

FIG. 1 illustrates a system 20 for non-destructively inspecting a component 22 of a powerplant 24 for an aircraft, while the aircraft powerplant 24 is still assembled for example. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured to use ultrasound for the inspection of the powerplant component 22. The inspection system 20 of FIG. 1, for example, includes an inspection probe assembly 28, a display 30 and a measurement system 32. Examples of the display 30 include, but are not limited to, a screen, a monitor and/or a touch screen. The probe assembly 28 of FIG. 1 includes a media conduit 34, an electronic ultrasonic inspection probe 36 and a preload device 38.

The media conduit 34 is configured to provide a contained volume for directing an acoustic coupling media 40 (e.g., an ultrasonic coupling media) to an interface between the inspection probe 36 and the powerplant component 22 within the powerplant interior 26. Briefly, the acoustic coupling media 40 may be an ultrasonic coupling liquid such as water, a glycerin solution or the like. Alternatively, the acoustic coupling media 40 may be an ultrasonic gel. The media conduit 34 of FIG. 1 may also be configured as a relatively stiff guide tube for guiding movement of the inspection probe 36 into the powerplant interior 26 for engaging the powerplant component 22 as described below in further detail.

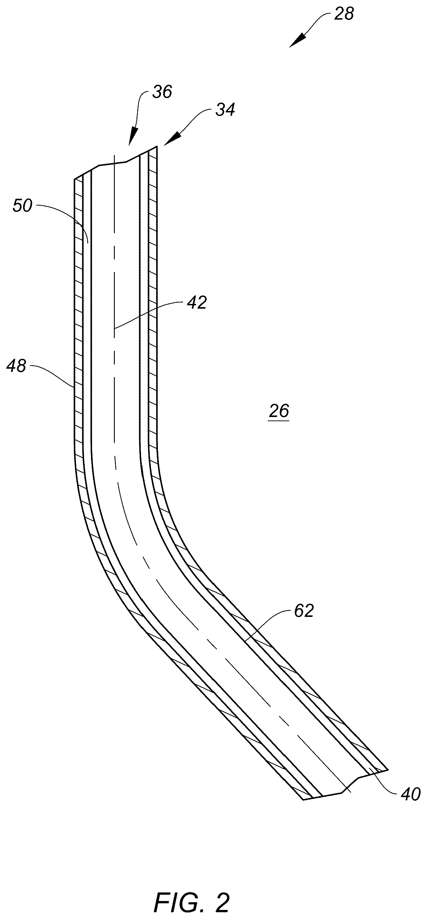

The media conduit 34 may be configured as or otherwise include a length of stiff, rigid tubing. The media conduit 34 extends longitudinally along a longitudinal centerline 42 from a base end 44 of the media conduit 34 to a distal end 46 of the media conduit 34. Briefly, the centerline 42 may be a longitudinal centerline of the media conduit 34, a longitudinal centerline the inspection probe 36 and/or, more generally, a longitudinal centerline of the entire probe assembly 28. In addition, while the centerline 42 of FIG. 1 and, thus, the media conduit 34 follow a straight line trajectory from the conduit base end 44 to the conduit distal end 46, the present disclosure is not limited to such an exemplary arrangement. For example, referring to FIG. 2, at least a portion of the centerline 42 and, thus, the media conduit 34 longitudinally between the conduit base end 44 and the conduit distal end 46 (see FIG. 1) may alternatively follow a non-straight line trajectory; e.g., a bend trajectory, a curved trajectory, etc. Referring again to FIG. 1, a sidewall 48 of the media conduit 34 forms an inner center bore 50 of the media conduit 34. The conduit bore 50 extends longitudinally along the centerline 42 through the media conduit 34 from the conduit base end 44 to the conduit distal end 46.

At the conduit distal end 46, the media conduit 34 is configured to sealingly engage an exterior surface 52 of the powerplant component 22. The conduit distal end 46 of FIG. 1, for example, may be longitudinally abutted against the component surface 52 through a seal element 54. This seal element 54 may be attached to the media conduit 34 at (e.g., on, adjacent or proximate) the conduit distal end 46, or otherwise integrated with the media conduit 34 at the conduit distal end 46. With this arrangement, the seal element 54 may be compressed and/or clamped longitudinally between the conduit distal end 46 and the component surface 52 to provide a sealed interface (e.g., a substantially or completely fluid-tight coupling) between the media conduit 34 and the powerplant component 22. Examples of the seal element 54 include, but are not limited to, an O-ring, a polymer gasket or the like.

The media conduit 34 may be removably mounted to the aircraft powerplant 24 for the inspection of the powerplant component 22. The media conduit 34, for example, may be rigidly attached to a stationary structure 56 (e.g., a casing, a wall, etc.) of the aircraft powerplant 24 through a media conduit mount 58; e.g., a grommet, a rim, a mounting flange, etc. Briefly, this stationary structure 56 may house and/or form the powerplant interior 26. The conduit mount 58 may be mechanically attached, bonded or otherwise fixed to the conduit sidewall 48. The conduit mount 58 of FIG. 1 projects laterally out (e.g., radially outward relative to the centerline 42) from the conduit sidewall 48 along a surface of the stationary structure 56. The conduit mount 58 may be abutted against the stationary structure 56 and its surface. The conduit mount 58 may be mechanically fastened (e.g., bolted), clamped or otherwise attached to the stationary structure 56. The conduit mount 58 may also or alternatively be clamped against or otherwise biased longitudinally towards the stationary structure 56 by the preload device 38.

The media conduit 34 may be configured to facilitate locating a probe head 60 of the inspection probe 36 with the powerplant component 22. The media conduit 34 of FIG. 1, for example, may be configured as a guide for inserting the inspection probe 36 into the powerplant interior 26 and/or maneuvering the probe head 60 within the powerplant interior 26. The media conduit 34 of FIG. 1 may also be configured as a support (e.g., a frame, a backbone, an exoskeleton, etc.) for a longitudinal length of the relatively flexible inspection probe 36 and its probe body 62 which extends longitudinally from (a) a location outside of the powerplant interior 26 to (b) a location inside of the powerplant interior 26 next to the powerplant component 22. The inspection probe 36 of FIG. 1, for example, extends longitudinally through the media conduit 34 and its conduit bore 50 from a base end 64 of the inspection probe 36 to a distal end 66 of the inspection probe 36. The media conduit 34 and its conduit sidewall 48 provide a stiff, rigid structure for the relatively flexible inspection probe 36 and its members 60 and 62 to engage; e.g., contact, slide against, rest against, etc. The probe head 60 may thereby slide along an interior surface of the conduit sidewall 48 during assembly of the inspection probe 36 with the media conduit 34 and/or deployment of the inspection probe 36 with the powerplant component 22. Following this assembly, the media conduit 34 may maintain an extended linear (e.g., non-buckled, non-kinked, etc.) form of the inspection probe 36 for at least the length of the inspection probe 36 within the media conduit 34.

The inspection probe 36 may be configured as or otherwise include a borescope or another flexible or rigid elongated probe. The inspection probe 36 of FIG. 1, for example, includes the probe body 62 (e.g., a flexible tether), the probe head 60 and an ultrasonic inspection device 68 with at least (or only) one ultrasonic transducer 70.

The probe body 62 extends longitudinally along the centerline 42 of the inspection probe 36 and its members 60 and 62 from the probe base end 64 to a longitudinal proximal end 72 of the probe head 60. The probe body 62 is a flexible body.

The probe head 60 is disposed at the probe distal end 66. The probe head 60 of FIG. 1, for example, extends longitudinally along the centerline 42 from the head proximal end 72 to the probe distal end 66; here, also a longitudinal distal end of the probe head 60. The ultrasonic inspection device 68 and its ultrasonic transducer 70 are arranged with (e.g., mounted to and/or disposed in) the probe head 60. The ultrasonic inspection device 68 and its ultrasonic transducer 70 may also be disposed at the probe distal end 66. At this probe distal end 66, the probe head 60 is configured to longitudinally contact, abut against or otherwise engage the component surface 52 at an inspection location 74 for the inspection of the powerplant component 22. Here, the ultrasonic transducer 70 may also directly and/or indirectly engage the component surface 52 at the probe distal end 66. For example, the probe head 60 and its ultrasonic transducer 70 may directly contact the component surface 52 as well as indirectly engage the component surface 52 through the acoustic coupling media 40 within the conduit bore 50.

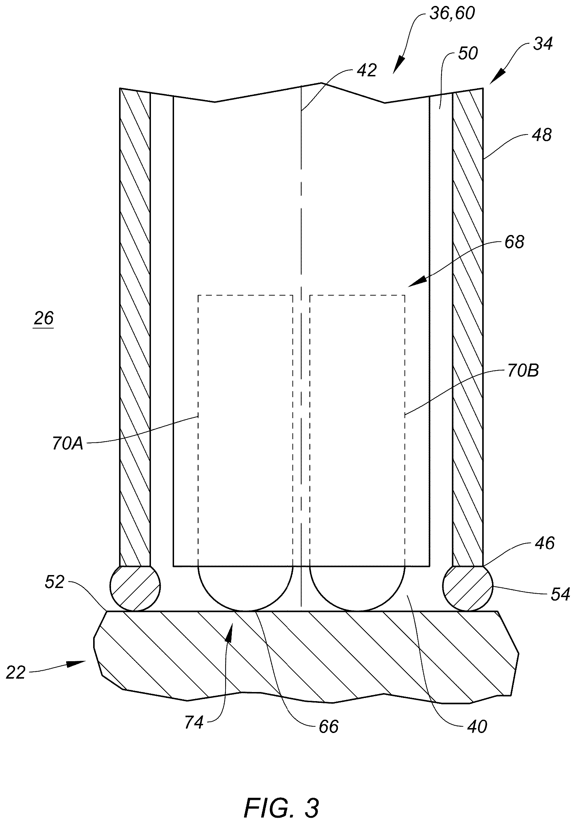

The ultrasonic inspection device 68 is configured to generate an ultrasonic signal 76. The ultrasonic inspection device 68 is also configured to sense a reflection of the ultrasonic signal 76 - an ultrasonic reflection signal 78. The ultrasonic transducer 70 of FIG. 1, for example, is configured as an ultrasonic transceiver which both generates the ultrasonic signal 76 and senses the reflection signal 78. The present disclosure, however, is not limited to such an exemplary probe head arrangement. For example, referring to FIG. 3, the ultrasonic inspection device 68 may alternatively include at least (or only) two ultrasonic transducers 70A and 70B (generally referred to as "70"). The first ultrasonic transducer 70A may be configured as an ultrasonic transmitter that generates the ultrasonic signal 76 (see FIG. 1). The second ultrasonic transducer 70B may be configured as an ultrasonic sensor that senses the reflection of the ultrasonic signal 76 (see FIG. 1).

The preload device 38 is operatively coupled to (a) the stationary structure 56 and (b) the inspection probe 36 and its probe body 62. The preload device 38 is configured to preload the probe head 60 and its ultrasonic transducer 70 against the component surface 52 at the inspection location 74. The preload device 38, for example, may push the probe body 62 further into the media conduit 34 and apply a longitudinal force onto the probe body 62, for example once the probe body 62 can no longer move longitudinally further into the media conduit 34. The longitudinal force may transfer longitudinally through the probe body 62 and into the probe head 60, thereby pressing the probe head 60 against the component surface 52. The probe head 60 and its ultrasonic transducer 70 may thereby be preloaded against the component surface 52.

The measurement system 32 is configured in signal communication (e.g., hardwired and/or wirelessly coupled) with the ultrasonic inspection device 68 and its ultrasonic transducer 70 as well as the display 30. The measurement system 32 may be implemented with a combination of hardware and software. The hardware may include a signal generator 80 (e.g., an oscillating power source), an electrical meter 82, a memory 84 and at least one processing device 86, which processing device 86 may include one or more single-core and/or multi-core processors. The hardware may also or alternatively include analog and/or digital circuitry other than that described above.

The signal generator 80 is in signal communication with the processing device 86 such that operation of the signal generator 80 is controlled by the processing device 86. The signal generator 80 is also in signal communication with the ultrasonic inspection device 68 and its ultrasonic transducer 70; e.g., the ultrasonic transceiver or the ultrasonic transmitter. This signal generator 80 is configured to energize the ultrasonic transducer 70 with an actuation voltage such that the ultrasonic transducer 70 generates its ultrasonic signal 76 for transmission into the powerplant component 22.

The electrical meter 82 is in signal communication with the processing device 86. The electrical meter 82 is also in signal communication with the ultrasonic inspection device 68 and its ultrasonic transducer 70; e.g., the ultrasonic transceiver or the ultrasonic receiver. This electrical meter 82 is configured to measure a sensor voltage or current generated by the ultrasonic transducer 70 upon sensing the reflection signal 78.

The memory 84 is configured to store software (e.g., program instructions) for execution by the processing device 86, which software execution may control and/or facilitate performance of one or more operations such as those described below. The memory 84 may be a non-transitory computer readable medium. For example, the memory 84 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

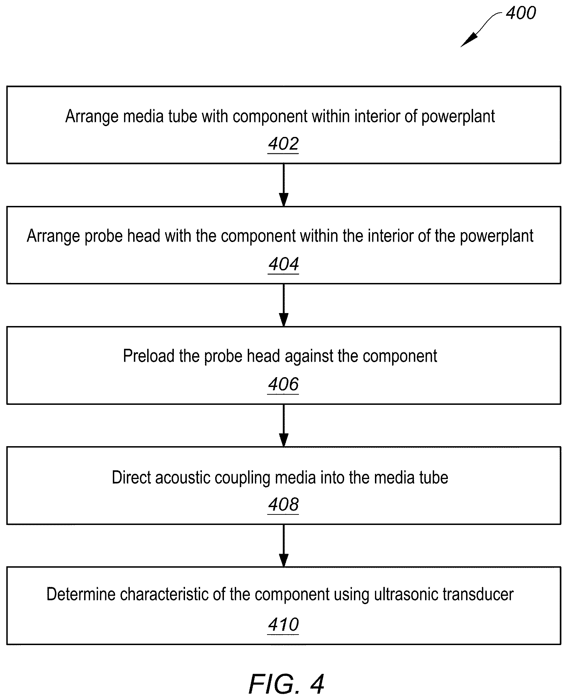

FIG. 4 is a flow diagram of a method 400 for inspecting the powerplant component 22. For ease of description, the inspection method 400 is described below with reference to the inspection system 20 of FIG. 1. The powerplant component 22 is also described below as being installed with the aircraft powerplant 24 and disposed within the powerplant interior 26, where the aircraft powerplant 24 is fully or substantially assembled. The inspection method 400 of the present disclosure, however, may alternatively be performed with other inspection systems (e.g., with the arrangements of FIG. 3, etc.) and/or while the aircraft powerplant 24 is partially disassembled into one or more sub-assemblies.

In step 402, the media conduit 34 is arranged with the aircraft powerplant 24. In particular, an inner portion of the media conduit 34 of FIG. 1 is inserted into the powerplant interior 26. To facilitate this insertion, an access cover, a powerplant component and/or the like may be removed from the aircraft powerplant 24 or opened to provide an access port into the powerplant interior 26. The inner portion of the media conduit 34 may then be passed through the access port into the powerplant interior 26 and moved (e.g., longitudinally translated) until the conduit distal end 46 engages the component surface 52 through the seal element 54. The media conduit 34 may be preloaded longitudinally against the component surface 52 manually or using the preload device 38 (or another preload device) to provide the sealed interface between the media conduit 34 and the powerplant component 22. The media conduit 34 may then be fixedly coupled to the stationary structure 56 using the conduit mount 58.

In step 404, the probe head 60 is arranged with the powerplant component 22. The probe head 60, for example, is inserted into the powerplant interior 26. More particularly, the probe head 60 is inserted into the conduit bore 50. The inspection probe 36 and its probe head 60 are passed longitudinally through the media conduit 34 and its conduit bore 50 and moved (e.g., longitudinally translated) until the probe head 60 and its probe distal end 66 are located proximate the powerplant component 22 and its component surface 52 at the inspection location 74. Note, while this arrangement of the probe head 60 is described as occurring following the arrangement of the media conduit 34 within the powerplant interior 26, it is contemplated the probe head 60 may alternatively be arranged with the media conduit 34 prior to the arrangement of the media conduit 34 within the powerplant interior 26. In either case, once the probe head 60 is located proximate the powerplant component 22 and its component surface 52, the inspection probe 36 and its probe head 60 may then be further moved (e.g., longitudinally translated) such that the probe head 60 and its ultrasonic transducer 70 may be abutted against and/or otherwise longitudinally engage the component surface 52 at the inspection location 74.

In step 406, the probe head 60 is preloaded against the powerplant component 22 and its component surface 52 at the inspection location 74. The preload device 38, for example, may push the probe body 62 further into the media conduit 34 and apply a longitudinal force onto the probe body 62, for example once the probe body 62 can no longer move longitudinally further into the media conduit 34. The longitudinal force may transfer longitudinally through the probe body 62 and into the probe head 60, thereby pressing the probe head 60 against the component surface 52. The probe head 60 and its ultrasonic transducer 70 may thereby be preloaded against the component surface 52; see also FIG. 3. This preload may be equal to or greater than one or two pounds (1-2 lbs); e.g., between one and one-half pounds (1.5 lbs) and four and one-half pounds (4.5 lbs). The present disclosure, however, is not limited to such an exemplary preload and may change based on ultrasonic transducer specifications.

In step 408, the acoustic coupling media 40 is directed to the interface between the probe head 60 and the powerplant component 22. The acoustic coupling media 40, for example, may be poured, pumped and/or otherwise directed into the conduit bore 50; e.g., from outside of the aircraft powerplant 24. This acoustic coupling media 40 may flow through an annulus formed by and radially between the probe body 62 and the conduit sidewall 48 to the conduit distal end 46. At the conduit distal end 46, the acoustic coupling media 40 may flow around and contact (a) the probe head 60 and its ultrasonic transducer 70 and (b) the component surface 52. The acoustic coupling media 40 may thereby enhance an acoustic coupling between the ultrasonic transducer 70 and the powerplant component 22. In some embodiments, the acoustic coupling media 40 may be directed into the conduit bore 50 prior to the longitudinally engaging (e.g., abutting) and/or the preloading the probe head 60 against the component surface 52. In other embodiments, the acoustic coupling media 40 may be directed into the conduit bore 50 following the longitudinally engaging (e.g., abutting) and/or the preloading the probe head 60 against the component surface 52.

In step 410, a characteristic of the powerplant component 22 is determined using the ultrasonic inspection device 68 and its ultrasonic transducer 70. The processing device 86, for example, may signal the signal generator 80 to energize the ultrasonic transducer 70 to generate the ultrasonic signal 76. This ultrasonic transducer 70 may then direct the ultrasonic signal 76 out of the probe head 60, through the acoustic coupling media 40, and into the powerplant component 22.

Where the powerplant component 22 includes one or more internal defects 88, at least a portion of the ultrasonic signal 76 may reflect internally within the powerplant component 22 against the internal defect(s) 88 back towards the ultrasonic inspection device 68. Herein, the term "defect" may describe a physical anomaly present within a powerplant component which may negatively affect a useful life of that powerplant component and/or performance of that powerplant component. Examples of the internal defect(s) 88 include, but are not limited to, cracks, voids, corrosion, density variations, areas of poor solidification (e.g., sintering) and/or the like. By contrast, where the powerplant component 22 does not include any internal defects 88, the ultrasonic signal 76 may travel through the powerplant component 22 (e.g., uninterrupted) until being reflected by a (e.g., back) surface of the powerplant component 22 and/or an interface between the powerplant component 22 and still another powerplant component.

From the powerplant component 22, the reflection signal 78 (whether reflected by the internal defect(s) 88, a surface of the powerplant component 22, an interface between the powerplant component 22 and still another engine component, and/or otherwise) is transmitted out of the powerplant component 22, through the acoustic coupling media 40, and into the probe head 60. Within the probe head 60, the ultrasonic transducer 70 senses the reflection signal 78 and the electrical meter 82 measures one or more parameters of the sensed reflection signal 78 to provide a feedback signal to the processing device 86 indicative of the one or more parameters of the reflection signal 78.

The processing device 86 processes data from the feedback signal to determine a characteristic of the powerplant component 22. For example, the processing device 86 may determine a transmission period spanning from when the ultrasonic signal 76 is transmitted by the ultrasonic transducer 70 to when the reflection signal 78 is sensed by the ultrasonic transducer 70. By comparing this measured transmission period to an expected transmission period, the processing device 86 may determine if the ultrasonic signal 76 was reflected by any anomalies within the powerplant component 22 (e.g., an internal defect) prior to reaching another reflection feature; e.g., a surface of the powerplant component 22, an interface between the powerplant component 22 and still another engine component, and/or otherwise. In addition or alternatively, the reflection of the ultrasonic signal 76 may also change an amplitude of the signal providing the reflection signal 78 with a different amplitude than the original ultrasonic signal 76. By comparing the data from the feedback signal to threshold data, the processing device 86 may determine if the powerplant component 22 includes (or is likely to include) any internal defect(s) 88. Conversely, the processing device 86 may determine if the powerplant component 22 is free (or is likely to be free) of any internal defect(s) 88.

When the step 410 identifies presence of no internal defects in material of the powerplant component 22, information indicative of such may be presented on the display 30. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 410 identifies the presence of internal defect(s) 88, information indicative of such may be presented on the display 30. This information may simply identify the presence of the internal defect(s) 88. The information may also or alternatively indicate the inspected powerplant component 22 does not meet / is outside of the component specification for that powerplant component 22. Inspection personnel may then take appropriate next steps to further inspect the powerplant component 22 and/or initiate a process for repairing the powerplant component 22 or replacing the powerplant component 22. While the inspection method 400 is described above identifying whether or not the inspected powerplant component 22 includes any internal defect(s) 88, this inspection method 400 may also (or alternatively) be extended to determine one or more other physical characteristics about the inspected powerplant component 22.

After performing the step 408 or 410, the inspection probe 36 and the media conduit 34 may be removed from the powerplant interior 26. Alternatively, the inspection probe member(s) 34, 36 may be (e.g., slightly) retracted from the powerplant component 22 and its component surface 52. Thus, when the powerplant component 22 is rotatable (e.g., where the powerplant component 22 is the rotor disk), the powerplant component 22 may be rotated about its rotational axis to facilitate repeating the foregoing inspection method 400 at another inspection location.

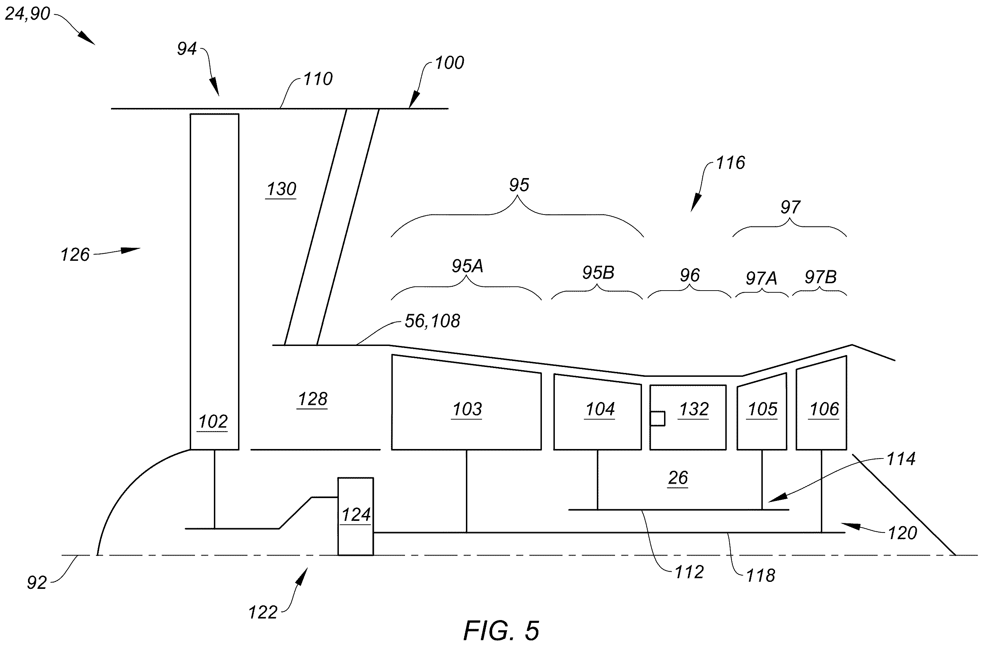

FIG. 5 illustrates the aircraft powerplant 24 as a gas turbine engine 90 such as a turbofan engine. This turbine engine 90 extends axially along an axis 92 between a forward, upstream end of the turbine engine 90 and an aft, downstream end of the turbine engine 90. Briefly, the axis 92 may be a centerline axis of the turbine engine 90 and/or one or more of its members. The axis 92 may also or alternatively be a rotational axis for one or more members of the turbine engine 90. The turbine engine 90 of FIG. 5 includes a propulsor section 94 (e.g., a fan section), a compressor section 95, a combustor section 96 and a turbine section 97. The compressor section 95 of FIG. 5 includes a low pressure compressor (LPC) section 95A and a high pressure compressor (HPC) section 95B. The turbine section 97 of FIG. 5 includes a high pressure turbine (HPT) section 97A and a low pressure turbine (LPT) section 97B.

The propulsor section 94, the LPC section 95A, the HPC section 95B, the combustor section 96, the HPT section 97A and the LPT section 97B may be arranged sequentially along the axis 92 within a stationary engine housing 100. The propulsor section 94 includes a bladed propulsor rotor 102; e.g., a fan rotor. The LPC section 95A includes a bladed low pressure compressor (LPC) rotor 103. The HPC section 95B includes a bladed high pressure compressor (HPC) rotor 104. The HPT section 97A includes a bladed high pressure turbine (HPT) rotor 105. The LPT section 97B includes a bladed low pressure turbine (LPT) rotor 106. These bladed engine rotors 102-106 is housed within the engine housing 100. The engine housing 100 of FIG. 5, for example, includes an inner housing structure 108 (e.g., a core case structure) and an outer housing structure 110 (e.g., a propulsor case structure). The inner housing structure 108 may house one or more of the engine sections 95A-97B and their engine rotors 103-106, where the powerplant interior 26 may be within this inner housing structure 108, and the powerplant component 22 (see FIG. 1) may be included in one of the engine rotors 103-106. The outer housing structure 110 may house at least the propulsor section 94 and its propulsor rotor 102.

The HPC rotor 104 is coupled to and rotatable with the HPT rotor 105. The HPC rotor 104 of FIG. 5, for example, is connected to the HPT rotor 105 through a high speed shaft 112. At least (or only) the HPC rotor 104, the HPT rotor 105 and the high speed shaft 112 collectively form a high speed rotating assembly 114; e.g., a high speed spool of a core 116 of the turbine engine 90. This high speed rotating assembly 114 of FIG. 5 and its members 104, 105 and 112 are rotatable about the axis 92.

The LPC rotor 103 is coupled to and rotatable with the LPT rotor 106. The LPC rotor 103 of FIG. 5, for example, is connected to the LPT rotor 106 through a low speed shaft 118. At least (or only) the LPC rotor 103, the LPT rotor 106 and the low speed shaft 118 collectively form a low speed rotating assembly 120; e.g., a low speed spool of the engine core 116. This low speed rotating assembly 120 is further coupled to the propulsor rotor 102 through a drivetrain 122. This drivetrain 122 may be configured as a geared drivetrain, where a geartrain 124 (e.g., a transmission, a speed change device, an epicyclic geartrain, etc.) is disposed between and operatively couples the propulsor rotor 102 to the low speed rotating assembly 120 and its LPT rotor 106. With this arrangement, the propulsor rotor 102 may rotate at a different (e.g., slower) rotational speed than the low speed rotating assembly 120 and its LPT rotor 106. However, the drivetrain 122 may alternatively be configured as a direct drive drivetrain, where the geartrain 124 is omitted. With such an arrangement, the propulsor rotor 102 rotates at a common (the same) rotational speed as the low speed rotating assembly 120 and its LPT rotor 106. The low speed rotating assembly 120 of FIG. 5 and its members 103, 106 and 118 as well as the propulsor rotor 102 are rotatable about the axis 92.

During operation, ambient air from outside of the aircraft enters the turbine engine 90 through an airflow inlet 126. This air is directed across the propulsor section 94 and into a (e.g., annular) core flowpath 128 and a (e.g., annular) bypass flowpath 130. The core flowpath 128 of FIG. 5 extends sequentially through the LPC section 95A, the HPC section 95B, the combustor section 96, the HPT section 97A and the LPT section 97B from an airflow inlet into the core flowpath 128 to a combustion products exhaust out from the core flowpath 128 and the engine core 116. The air entering the core flowpath 128 may be referred to as "core air". The bypass flowpath 130 extends through a bypass duct, which bypasses (e.g., is disposed radially outboard of and extends along) the engine core 116. The air within the bypass flowpath 130 may be referred to as "bypass air".

The core air is compressed by the LPC rotor 103 and the HPC rotor 104 and is directed into a (e.g., annular) combustion chamber 132 of a (e.g., annular) combustor in the combustor section 96. Fuel is injected into the combustion chamber 132 by one or more fuel injectors and mixed with the compressed core air to provide a fuel-air mixture. This fuel-air mixture is ignited and combustion products thereof flow through and sequentially drive rotation of the HPT rotor 105 and the LPT rotor 106 about the axis 92. The rotation of the HPT rotor 105 and the LPT rotor 106 respectively drive rotation of the HPC rotor 104 and the LPC rotor 103 about the axis 92 and, thus, compression of the air received from the core inlet. The rotation of the LPT rotor 106 also drives rotation of the propulsor rotor 102. The rotation of the propulsor rotor 102 propels the bypass air through and out of the bypass flowpath 130. The propulsion of the bypass air may account for a majority of thrust generated by the turbine engine 90 of FIG. 5.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
arranging a probe assembly with a component, the probe assembly including a conduit and an inspection probe, the inspection probe including a probe head located within a bore of the conduit, and the probe head comprising an ultrasonic transducer;
the arranging of the probe assembly including moving the conduit longitudinally along a centerline of the probe assembly to sealingly engage a distal end of the conduit against a surface of the component, and moving the inspection probe longitudinally along the centerline of the probe assembly to abut the probe head against the surface of the component, wherein an acoustic coupling media is disposed within the bore of the conduit contacting the probe head and the surface of the component; and
determining a characteristic of the component using the probe assembly, the determining of the characteristic comprising generating an ultrasonic signal using the ultrasonic transducer, and directing the ultrasonic signal from the probe head, through the acoustic coupling media, into the component.

2. The inspection method of claim 1, further comprising directing the acoustic coupling media into the conduit after the distal end of the conduit sealingly engages the surface of the component.

3. The inspection method of claim 2, wherein the acoustic coupling media is directed into the conduit before the probe head is abutted against the surface of the component, or
wherein the acoustic coupling media is directed into the conduit after the probe head is abutted against the surface of the component.

4. The inspection method of any preceding claim, wherein the probe assembly further includes a seal element at the distal end of the conduit, and the seal element provides a sealed interface between the conduit and the surface of the component when the conduit sealingly engages the surface of the component.

5. The inspection method of claim 4, wherein the seal element comprises an O-ring.

6. The inspection method of any preceding claim, further comprising preloading the conduit at the sealing engagement between the distal end of the conduit and the surface of the component, and / or
further comprising preloading the probe head against the surface of the component sealed by a seal element at a tip of the inspection probe.

7. The inspection method of any preceding claim, wherein
a reflection of the ultrasonic signal is directed out of the component, through the acoustic coupling media, to the probe head; and
the determining of the characteristic further comprises detecting a parameter of the reflection of the ultrasonic signal using the ultrasonic transducer.

8. The inspection method of claim 7, wherein the determining of the characteristic further comprises processing data indicative of the parameter to determine the characteristic.

9. The inspection method of any preceding claim, wherein the characteristic is determined to detect presence of a defect internal to the component.

10. The inspection method of any preceding claim, wherein the acoustic coupling media is a liquid, and / or
wherein the acoustic coupling media comprises water.

11. The inspection method of any preceding claim, wherein the component is disposed within an interior of a powerplant during the determining of the characteristic of the component.

12. The inspection method of claim 11, wherein the powerplant comprises an aircraft engine, and the component comprises a component of the aircraft engine.

13. The inspection method of any preceding claim, wherein the component comprises an engine component, or
wherein the component comprises a rotor disk of a turbine engine.

14. An inspection method, comprising:
inserting a probe assembly into an interior of a powerplant, the powerplant comprising a component within the interior of the powerplant, the probe assembly including a conduit and an inspection probe, the inspection probe including a probe head located within a bore of the conduit, and the probe head comprising an ultrasonic transducer;
translating the conduit longitudinally along a centerline of the probe assembly to sealingly engage a distal end of the conduit against the component;
translating the inspection probe longitudinally along the centerline of the probe assembly to abut the probe head against the component, wherein an acoustic coupling media is disposed within the bore of the conduit contacting the probe head and the component; and
determining presence of a defect internal to the component using the probe assembly, the determining of the presence of the defect comprising generating an ultrasonic signal using the ultrasonic transducer, and directing the ultrasonic signal from the probe head, through the acoustic coupling media, into the component,
optionally further comprising directing the acoustic coupling media into the bore of the conduit after sealingly engaging the distal end of the conduit against the component and before abutting the probe head against the component.

15. A system for inspecting a powerplant component, the system comprising:
a conduit extending longitudinally along a centerline from a base end of the conduit to a distal end of the conduit, the conduit configured to translate longitudinally along the centerline such that the distal end of the conduit is operable to sealing engage a surface of the powerplant component;
an inspection probe including a probe body and a probe head connected to the probe body, the probe body projecting longitudinally into a bore of the conduit to the probe head, a distal end of the probe head configured to abut against the surface of the powerplant component, and the probe head comprising an ultrasonic transducer;
a preload device configured to preload at least one of the conduit or the probe head longitudinally against the surface of the powerplant component; and
an acoustic coupling media for directing into the bore of the conduit and contacting the probe head and the surface of the powerplant component.
